# EUROPÄISCHE PATENTSCHRIFT

(11) **EP 1 015 165 B1**
(45) Veröffentlichungstag und Bekanntmachung des Hinweises auf die Patenterteilung: **04.06.2003**
(21) Anmeldenummer: 98952534.0
(22) Anmeldetag: 03.09.1998
(51) Int. Cl.: B23K 26/02

(54) **VERFAHREN UND VORRICHTUNG ZUM MATERIALBEARBEITEN MIT PLASMA INDUZIERENDER HOCHENERGIESTRAHLUNG**
METHOD AND DEVICE FOR TREATING MATERIALS WITH PLASMA-INDUCING HIGH ENERGY RADIATION
PROCEDE ET DISPOSITIF POUR LE TRAITEMENT DE MATIERE AVEC UN RAYONNEMENT A HAUTE ENERGIE INDUISANT UN PLASMA

(30) Priorität: 19.09.1997 DE 19741329
(43) Veröffentlichungstag der Anmeldung: 05.07.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: BEERSIEK, Jörg, D-52066 Aachen (DE); SCHULZ, Wolfgang, D-52379 Langerwehe (DE)
(74) Vertreter: Draudt, Axel Hermann Christian, Dipl.-Ing.
(86) Internationale Anmeldenummer: DE9802587
(87) Internationale Veröffentlichungsnummer: WO99015302

(56) Entgegenhaltungen:
- DE-C- 4 434 409
- KAI-UWE PRIESSIG ET AL.: "High speed laser cutting of thin metal sheets" SPIE, Bd. 2207, 1996, XP000671656
- BRÜGGEMANN ET AL.: "Prediction of weld data using process control based on surface temperature measurement for plasma and laser welding of the duplex steel 1.4462" WELDING IN THE WORLD/ LE SOUDAGE DANS LE MONDE, Bd. 38, 1996, Seiten 369-379, XP000637341 GB

## Beschreibung

Die Erfindung bezieht sich auf ein Verfahren mit den im Oberbegriff des Anspruchs 1 angegebenen Verfahrensschritten.

Die Materialbearbeitung mit Plasma induzierender Hochenergiestrahlung, zum Beispiel mit Laserstrahlung oder mit Elektronenstrahlung, bedarf bei ihrer Anwendung der on-line-Qualitätsüberwachung und der Regelung. Eine Optimierung des Bearbeitungsprozesses ist wünschenswert. Es ist daher seit langem allgemein bekannt, optische und akustische Signale aus dem Bearbeitungsbereich zur Qualitätskontrolle einzusetzen. Beispielsweise kann der Durchschweißgrad, der ein Qualitätsmerkmal für eine vollständige Verschweißung eines Werkstücks sein kann, durch Beobachtung der Unterseite des Werkstücks oder durch seitlich erfolgende Beobachtung des Bearbeitungsbereichs bestimmt werden, wobei zur Beobachtung optische Detektoren eingesetzt werden, die aus den optischen Intensitätswerten Frequenzschwerpunkte bestimmen, mit deren Hilfe auf den Durchschweißgrad zu schließen ist. Beide Methoden sind jedoch indirekt und mit Mängeln behaftet.

Aus der DE 44 34 409 C1 ist ein Verfahren mit den eingangs in Bezug genommenen Verfahrensschritten bekannt, die ein direktes Vorgehen betreffen. Die Beobachtung des Bereichs der Dampfkapillaren des Werkstücks erfolgt in der Achse der induzierenden Laserstrahlung. Aus der Beobachtung der Emission der Plasmastrahlung des gesamten Bereichs der Dampfkapillaren wird ein Mittelwert der Intensität bestimmt und als Maß für die Eindringtiefe verwendet. Dieses Verfahren macht eine Justierung der Meßeinrichtung bezüglich der Achse der Plasma induzierenden Laserstrahlung notwendig. Wegen der Mittelwertbildung sind die Beobachtungsergebnisse entsprechend summarisch, so daß die Beobachtungsgenauigkeit, die davon abhängige Auswertung und die davon widerum abhängige Steuerung des Prozesses der Materialbearbeitung entsprechend verbesserungswürdig erscheinen.

Der Erfindung liegt demgegenüber die Aufgabe zugrunde, ein Verfahren mit den eingangs in Bezug genommenen Verfahrensschritten so zu verbessern, daß eine verbesserte Steuerung der Materialbearbeitung erreicht wird bzw. eine weitergehende Verhinderung von Prozeßfehlern durch verbesserte direkte Prozeßbeobachtungen.

Diese Lösung dieser Aufgabe wird durch die im Anspruch 1 aufgeführten Verfahrensschritte erreicht.

Für die Erfindung ist zunächst von Bedeutung, daß von einer Mittelwertbildung bei der Auswertung der Intensitäten der Plasmastrahlung abgewichen wird. wesentlich ist demgegenüber eine Auswertung momentaner Plasmaintensitäten an mehreren Stellen des Beobachtungsbereichs der Dampfkapillaren. Es hat sich gezeigt, daß die an einer Meßstelle zu beobachtende Plasmaintensität direkt in Bezug zur Ausbildung der Dampfkapillaren steht. Infolgedessen können grundsätzlich durch pikselweise bzw. punktweise Beobachtung des Bearbeitungsbereichs die momentan vorhandene Form der Dampfkapillaren oder zumindest Kenngrößen dieser Form bestimmt werden. Die Messung der Plasmaintensitäten erfolgt punktweise parallel zur Achse der induzierenden Strahlung. Die Form der Dampfkapillaren bzw. deren Kenngrößen, also die im Kennzeichen des Anspruchs 1 erwähnten Kapillargeometriegrößen, lassen einen unmittelbaren Rückschluß auf die Qualität der Bearbeitung zu, weil eine hochqualitative Bearbeitung an der Form der Dampfkapillaren bzw. an den Kapillargeometriegrößen zu erkennen ist. Denn die Kapillargeometriegrößen vorbestimmter Bearbeitungsaufgaben sind für vorbestimmte Bearbeitungsqualitäten bekannt. Umgekehrt kann also anhand der gemessenen Kapillargeometriegrößen auf die effektiv vorhandene Bearbeitungsqualität geschlossen werden. Dabei wird eine jeweilige Justierung der Meßeinrichtung zur Achse der induzierenden Strahlung vermieden. Die bei diesem Verfahren gewonnenen Kapillargeometriegrößen werden zur Steuerung der Materialbearbeitung herangezogen. Auf diese Weise ermöglicht eine punktweise Auswertung momentaner Plasmaintensitäten eine zumindest teilweise Darstellung der Kapillaren. Deren Ausbildung bzw. Ausdehnung ist ein Maß für einen Bearbeitungsparameter, wie die Laserstrahlleistung oder die Vorschubgeschwindigkeit, die zur Steuerung der Materialbearbeitung beeinflußt werden.

Die Form einer Abtragsvertiefung bei einer Materialbearbeitung mit Plasma induzierender Hochenergiestrahlung erstreckt sich im wesentlichen in der Richtung der Achse der induzierenden Strahlung bzw. parallel dazu. Das ist im Hinblick auf ein möglichst tiefes Einschweißen in das Werkstück auch erforderlich. Im Hinblick auf ein solches gewünschtes tiefes Einschweißen wird das Verfahren vorteilhafterweise so durchgeführt, daß als Kapillargeometriegrößen eine Kapillarciefe verwendet wird. Die momentane Tiefe der Dampfkapillaren an allen Stellen des Bearbeitungsbereichs hängt direkt mit denjenigen Prozeßparametern zusammen, welche die Qualität der Bearbeitung bestimmen. Beispielsweise ist die Qualität der Bearbeitung schlecht, wenn die Kapillartiefe bei der Bearbeitung eines Werkstücks nicht so groß ist, wie sie bestimmungsgemäß sein soll.

Das Bearbeitungsergebnis kann dadurch vervollkommnet werden, daß aus einer Vielzahl von Kapillargeometriegrößen die Form der Dampfkapillaren bestimmt und der Steuerung der Materialbearbeitung zugrunde gelegt wird. Die vollständige Ermittlung der momentanen Form der Dampfkapillaren ermöglicht es, die Qualität der Bearbeitung exakt zu bestimmen. Es erfolgt eine vollständige direkte Beobachtung der momentanen Dampfkapillaren. Beispielsweise können entstehende bzw. entstandene Bearbeitungsfehler direkt beobachtet werden. Als Beispiel wird Schmelzbadauswurf beim Laserstrahlschweißen von Aluminium genannt. Ein teilweises Verschließen der Dampfkapillaren wird direkt abgebildet und bei richtiger Umsetzung der sich aus der Abbildung ergebenden Geometriedaten kann das Verfahren so gesteuert werden, daß der betreffende Bearbeitungsfehler verhindert wird. Eine derartige Verfahrenssteuerung ist optimal möglich, wenn die Form der Dampfkapillaren insgesamt bestimmt wird. Bei einer nur teilweisen Bestimmung der Form der Dampfkapillaren oder bei einer Bestimmung nur weniger Kapillargeometriegrößen ist eine entsprechend eingeschränkte Verfahrenssteuerung jedoch ebenfalls möglich.

Die Dampfkapillare erstreckt sich in der Achse der induzierenden Strahlung und auch parallel dazu mit unterschiedlichen Kapillartiefen und weist radial zu der genannten Achse bei unterschiedlichen Tiefenerstreckungen unterschiedliche radiale Abmessungen auf. Auch diese können als Kapillargeometriegrößen herangezogen werden, was insbesondere bei vollständiger Bestimmung der Form der Dampfkapillaren optimal möglich ist. Ein vereinfachtes verfahren ergibt sich jedoch, wenn die Länge der Öffnung der Dampfkapillaren in Vorschubrichtung als Kapillargeometriegröße verwendet wird. Diese Länge der Öffnung der Dampfkapillaren in Vorschubrichtung ist deswegen von Bedeutung, weil sie gemeinsam mit der Kapillartiefe das Aspektverhältnis bestimmt, nämlich das Verhältnis der genannten Länge zur Kapillartiefe. Ein hinreichend großes Aspektverhältnis ermöglicht ein ungehindertes Abströmen des Dampfes aus der Dampfkapillaren in die Umgebung, wodurch der Prozeß stabilisiert wird. Eine Durchführung des Verfahres im Hinblick auf eine vorbestimmte Länge der Öffnung der Dampfkapillaren in Vorschubrichtung ermöglicht qualitativ hinreichende Bearbeitungsergebnisse, wenn man davon ausgeht, daß die Einschweißtiefe bei vielen Bearbeitungsaufgaben konstant ist und durch einen vorbestimmten Wert für die Streckenenergie festgelegt werden kann, also durch das Verhältnis von Laserstrahlleistung zu Vorschubgeschwindigkeit. In einem besonderen Fall ist die Länge der Öffnung der Dampfkapillaren in vorschubrichtung als Kapillargeometriegröße von augenscheinlich besonderer Bedeutung. Denn bei einem Durchschweißen eines Werkstücks wird die Kapillarform augenblicklich erheblich schlanker, weil ein Großteil der eingestrahlten Energie durch die Dampfkapillare hindurchtritt, also nicht mehr zum Aufschmelzen von Werkstoff zur Verfügung steht. Dementsprechend verringert sich die genannte Länge, so daß durch direkte Beobachtung parallel zur Achse der induzierenden strahlung ein Durchschweißen augenblicklich festgestellt werden kann.

Bei vielen Materialbearbeitungen genügt es, die notwendige Energie zu bestimmen, weil eine Änderung während der Bearbeitung nicht erforderlich ist. Dazu wird die Streckenenergie bestimmt, nämlich das Verhältnis von Laserstrahlleistung zu Vorschubgeschwindigkeit. Die Streckenenergie steht für eine vorbestimmte Einschweißtiefe und diese bzw. die Kapillartiefe nehmen mit wachsender Streckenenergie monoton zu. Häufig brauchen bei derartigen Materialbearbeitungen dynamische Vorgänge im Schweißbereich nicht beachtet zu werden, zumal wenn ein ausreichendes Aspektverhältnis vorliegt, welches ein unbehindertes Abströmen des Dampfes aus der Kapillaren ermöglicht. Schweißfehler, zum Beispiel Poren, treten bei solchen Verfahren üblicherweise nicht auf. Falls jedoch kompliziertere Schweißaufgaben erfüllt werden müssen, wie zum Beispiel beim Schweißen von Konturen, müssen die Verfahrensparameter während der Materialbearbeitung gesteuert werden. Bei dieser Steuerung erfolgt üblicherweise eine Änderung der Laserstrahlleistung und/oder der Vorschubgeschwindigkeit. Es hat sich nun bei dem erfindungsgemäßen Verfahren mit parallel zur Achse der induzierenden Strahlung erfolgenden Messungen der momentanen Plasmaintensitäten ergeben, daß durch die kombinierte zeitaufgelöste Beobachtung der Position der Dampfkapillaren und deren Ausdehnung eine getrennte Überwachung der vorschubgeschwindigkeit und der Laserstrahlleistung ermöglicht wird. Denn die Länge der Öffnung der Dampfkapillaren in Vorschubrichtung und die Kapillartiefe wachsen beide monoton im gleichen Sinne mit monoton wachsender Laserstrahlleistung. Das ist bei der Vorschubgeschwindigkeit nicht der Fall. Bei monoton wachsender Vorschubgeschwindigkeit wächst zwar die Kapillarlänge monoton, die Einschweißtiefe bzw. die Kapillarziefe ist jedoch monoton fallend.

Aufgrund der vorstehenden Erkenntnisse kann das Verfahren so durchgeführt werden, daß die Laserstrahlleistung in Abhängigkeit von einer sich gleichsinnig mit der Kapillartiefe ändernden Länge der Öffnung der Dampfkapillaren geregelt wird.

Außerdem kann das Verfahren so durchgeführt werden, daß die Vorschubgeschwindigkeit in Abhängigkeit von einer sich gegensinnig zu der Kapillartiefe ändernder Länge der Öffnung der Dampfkapillaren geregelt wird.

In beiden vorgenannten Verfahrensfällen ist es nicht notwendig, daß die Verfahrensparameter der Laserscrahlleistung bzw. der Vorschubgeschwindigkeit für die Materialbearbeitung vorbestimmt sein müssen. Sie können vielmehr während der Bearbeitung bestimmt werden.

Die beiden vorbeschriebenen Verfahrensmöglichkeiten müssen nicht gleichzeitig genutzt werden. Beispielsweise kann eine Steuerung der Laserstrahlleistung bei fester Vorschubgeschwindigkeit ausreichen, wenn nur ein vorbestimmter Bereich der Kapillarlänge und der Kapillartiefe eingehalten werden soll, nicht jedoch feste Werte der Kapillarlänge und der Kapillartiefe.

Für die Materialbearbeitung ist jedoch nicht nur die Länge der Öffnung der Dampfkapillaren in Vorschubrichtung von Bedeutung, also die Kapillarlänge, sondern auch die Breite der Öffnung der Dampfkapillaren quer zur Vorschubrichtung, also die Kapillarbreite. Wird die Kapillarbreite beispielsweise zu klein, muß eine geeignete Steuerung der Materialbearbeitung erfolgen. Das Verfahren kann also auch so durchgeführt werden, daß die Breite der Öffnung der Dampfkapillaren quer zur Vorschubrichtung als Kapillargeometriegröße verwendet wird.

Die Erfindung bezieht sich desweiteren auch auf eine Vorrichtung zur Materialbearbeitung mit Plasma induzierender Hochenergiestrahlung mit den im Oberbegriff des Anspruchs 8 aufgeführten Merkmalen. Bezüglich dieser Vorrichtung liegt der Erfindung die Aufgabe zugrunde, sie so zu verbessern, daß die Steuerung der Materialbearbeitung im Sinne einer weitergehenden Verhinderung von Prozeßfehlern durch verbesserte direkte Prozeßbeobachtungen mit verbesserten Steuerungsmitteln durchgeführt werden kann.

Diese Aufgabe wird durch die im Anspruch 8 aufgeführten Merkmale gelöst.

Bei der vorbeschriebenen Vorrichtung wird eine zur Laserstrahlachse koaxiale Beobachtung genutzt. Die optische Achse dieser Beobachtung entspricht zwar der Laserstrahlachse, die faktische Beobachtung der momentanen Intensitäten des Bearbeitungsbereichs erfolgt jedoch in jedem Fall neben dieser optischen Laserstrahlachse. Infolge dieser seitlich erfolgenden Beobachtung bzw. Messung kann grundsätzlich auch die größte Kapillartiefe erfaßt werden, die sich in der Regel nicht an der Position der Laserstrahlachse befindet, sondern auf die Vorschubrichtung bezogen dahinter. Dabei wird eine jeweilige Justierung der Detektoren in der Achse der induzierenden Strahlung vermieden.

Eine sehr einfache Ausgestaltung der Vorrichtung liegt vor, wenn die Detektoren von Lochblenden gebildet sind. Mittels lediglich zweier Lochblenden kann ein Prozeßzustand erfaßt werden, da jede Lochblende lediglich einen Punktbereich der Wechselwirkungszone der Bearbeitung bzw. der Dampfkapillaren beobachtet bzw. mißt.

Die Vorrichtung kann vorteilhafterweise so ausgebildet werden, daß eine erste Lochblende in Vorschubrichtung und eine zweite Lochblende quer zur Vorschubrichtung jeweils außerhalb der Achse der induzierenden Strahlung angeordnet ist. Das Unterschreiten bestimmter Intensitätswerte der Plasmastrahlung kann die Steuerung der Materialbearbeitung beeinflussen.

Eine verbesserte Erfassung der Ausbildung der Dampfkapillaren wird erreicht, wenn mindestenes eine den Bereich der Dampfkapillaren überdeckende Zeilenkamera vorhanden ist. Eine Zeilenkamera besitzt eine Vielzahl von Detektoren, die in einer Zeile angeordnet sind. Dementsprechend wird eine Zeilenkamera vorteilhafterweise in Vorschubrichtung und/oder quer zur Vorschubrichtung oberhalb des Bearbeitungsbereichs des Werkstücks angeordnet. Die mit der Zeilenkamera außerhalb der optischen Achse und parallel dazu erfolgende Beobachtung liefert eine Vielzahl von Meßwerten, wobei die Vielzahl durch die Anzahl der Detektoren der Zeilenkamera bestimmt ist.

Eine weiter verbesserte Beobachtung der Bearbeitung bzw. der Dampfkapillaren läßt sich mit einer Vorrichtung erreichen, bei der ein den gesamten Bereich der Dampfkapillaren abbildender und in einzeln auswertbare Meßpunkte auflösender Bildgeber vorhanden ist. Die Genauigkeit des Meßergebnisses hängt von der Anzahl der auswertbaren Meßpunkte ab, also von der Anzahl der in der Fläche angeordneten Detektoren, die der Bildgeber aufweist.

Insbesondere kann die Vorrichtung so ausgestaltet werden, daß als Bildgeber eine CCD-Kamera, ein Fotodioden- oder ein Fotomultiplier-Array vorhanden ist. Die vorgenannten Bildgeber sind für die optische Überwachung bei der Materialbearbeitung mit Plasma induzierender Hochenergiestrahlung bewahrt und ermöglichen die für sie bekannten Einsatzverfahren, wie Taktsteuerung der Bildüberwachung und automatische Intensitätsanpassungen.

Die Erfindung wird anhand der Zeichnungen erläutert. Es zeigt:
- Fig.1: eine schematische Darstellung einer Vorrichtung zur Beobachtung eines Werkstücks beim Bearbeiten mit Laserstrahlung,
- Fig.2: einen Schnitt durch eine Dampfkapillare bei einer Einschweißung,
- Fig.3: einen Schnitt durch eine Dampfkapillare bei einer Durchschweißung,
- Fig.4: die Abhängigkeit der Kapillarlänge und der Kapillartiefe von der Vorschubgeschwindigkeit und
- Fig. 5: die Abhängigkeit der Kapillarlänge und der Kapillartiefe von der Laserstrahlleistung.

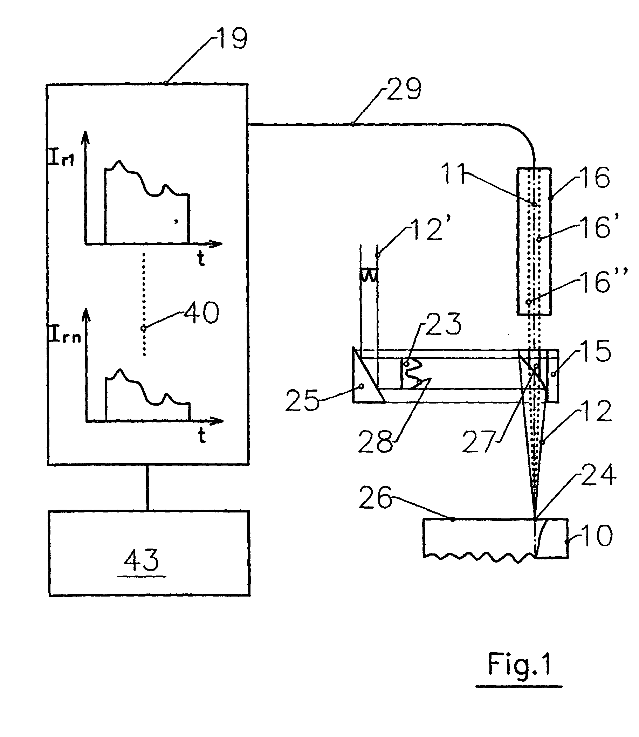

Fig.1 zeigt schematisch ein Werkstück 10, das mit fokussierter Laserstrahlung 12 bearbeitet wird. Als Materialbearbeitung kommt, je nach Einsatz des verwendeten Lasers, ein Schweißen, Schneiden, Bohren, Abtragen oder Umschmelzen in Frage. Die vom nicht dargestellten Laser abgegebene Laserstrahlung 12' wird mittels eines Umlenkspiegels 25 auf einen Fokussierspiegel 15 gelenkt, der die Laserstrahlung 12 auf das Werkstück 10 fokussiert. Der Fokus 24 liegt beispielsweise auf der Werkstückoberfläche 26. Als Fokussierspiegel 15 wird ein Lochspiegel eingesetzt, dessen Loch 27 innerhalb des Ringmaximums 28 der einen Ringmode 23 aufweisenden Laserstrahlung 12 angeordnet ist. Das Loch 27 läßt Freiraum für die Beobachtung der Werkstückoberfläche 26 im Bereich des Fokus 24 des Werkstücks 10. Zur Beobachtung des Bearbeitungsbereichs der werkstückoberfläche 26 wird eine Meßeinrichtung 16 eingesetzt, die in Fig.1 lediglich schematisch dargestellt ist. Beispielsweise werden zwei Detektoren 16',16" in Form von Lochblenden eingesetzt. Fig.1 zeigt diese Detektoren 16',16'' nicht im Detail, sondern lediglich bezüglich ihrer Meßrichtung. Danach erfolgt die Messung nicht in der Achse 11 der Plasma induzierenden Laserstrahlung, sondern im Abstand parallel dazu. Die bei der Bearbeitung beobachteten Meßwerte bzw. das von der Meßeinrichtung erfaßte Licht wird über eine Leitung 29 z.B. einen Lichtleiter im Falle einer Bearbeitung mit Nd:YAG-Laser, an eine Auswerteeinheit 19 weitergeleitet. Die Auswerteeinheit 19 zeigt, daß die Intensität I der Plasmastrahlung in Abhängigkeit von der Zeit t erfaßt wird. Die Erfassung erfolgt mehrfach, nämlich an den durch die Detektoren 16',16'' bestimmten Stellen. Demgemäß erfolgt eine punktweise Erfassung des Bearbeitungsbereichs. In der Auswerteeinheit 19 ist daher die Abhängigkeit Iᵣ₁ (t) erfaßt und dargestellt, also für einen ersten Meßpunkt rl. Darunter befindet sich eine weitere Darstellung Iᵣₙ (t). Hierdurch wird veranschaulicht, daß an einem weiteren Meßpunkt rn eine Erfassung der Intensität der Plasmastrahlungen in Abhängigkeit von der Zeit t erfolgt. Die Anordnung der Meßpunkte r1, r2 bis rn erfolgt zweckgemäß entsprechend der Bearbeitungsaufgabe. Die punktreihe 40 symbolisiert, daß eine Vielzahl von Meßpunkten verwendet werden kann, je nach eingesetzter Meßeinrichtung 16. Die Meßeinrichtung 16 kann als Detektoren Lochblenden aufweisen, sie kann aber auch als beliebiges zweckmäßiges meßwertegebendes oder bildgebendes Element ausgebildet sein, wie beispielsweise als Zeilenkamera, als CCD-Kamera, als Fotodioden- oder Fotomultiplier-Array. Entsprechend der jeweiligen Ausbildung der meßpunkteauswertenden Meßeinrichtung ergeben sich entsprechend vielzählige Meßpunkte, die ausgewertet werden können.
Die Auswerteeinheit 19 ist an eine Steuereinrichtung 43 angeschlossen, die von der Auswerteeinheit 19 gelieferte Daten verarbeitet. Die gelieferten Daten betreffen Kapillargeometriegrößen, welche von der Auswerteeinheit 19 aufgrund ihr vorgegebener Bezugswerte berechnet wurden, nämlich aufgrund von für die Bearbeitungsaufgabe bekannten Kapillargeometriegrößen.

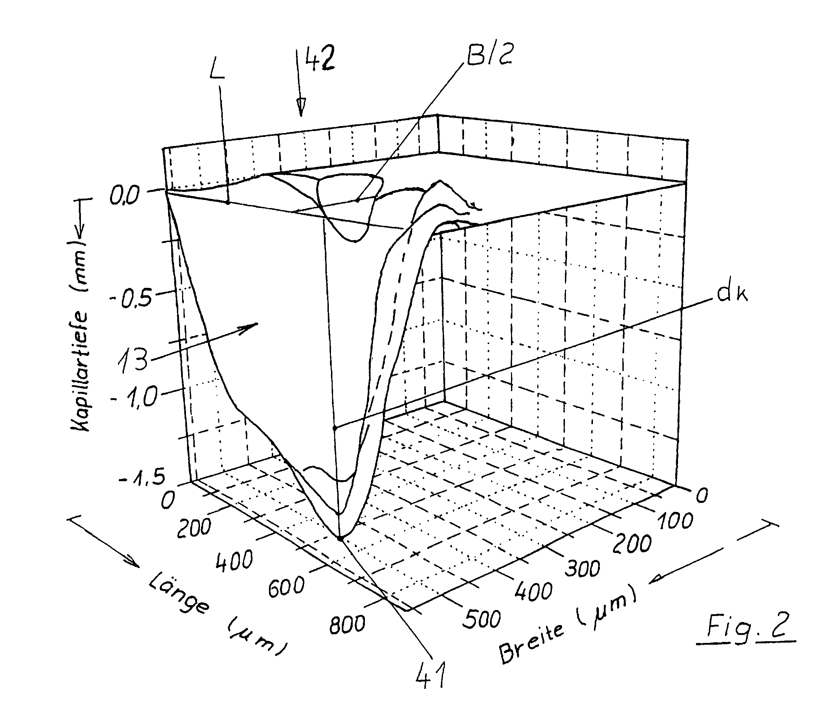

Es hat sich gezeigt, daß mit meßpunktegebenden bzw. bildgebenden Verfahren die Form der Dampfkapillaren bzw. die Form der Abtragsvertiefung des Bearbeitungsbereichs mehr oder weniger präzise erfaßt werden kann. Fig.2 zeigt eine dreidimensionale Darstellung einer Dampfkapillaren bei einer Einschweißung in ein Werkstück im Längsschnitt. Dabei ist die angegebene Länge in Vorschubrichtung zu sehen, die angegebene Breite quer zu der Vorschubrichtung. Die Kapillartiefe d_{K} bzw. die Einschweißtiefe ist in der Meßrichtung 42 unterschiedlich, je nach den physikalisch bedingten Ausbildungen der Wechselwirkungszone. Die dargestellte vollständige Abbildung der Dampfkapillaren ist nur dann möglich, wenn eine hinreichend genaue Beobachtung des gesamten Bearbeitungsbereichs erfolgt, also eine Beobachtung mit hinreichend vielen Meßpunkten. Es ist dann beispielsweise ersichtlich, daß der Scheitel 41 der Dampfkapillaren Abstand zur Strahlachse bzw. zur optischen Achse 42 hat. Das ist durch den relativen Vorschub der Laserstrahlung 12 und die sich in der Dampfkapillare einstellenden dynamischen Vorgänge bedingt.

Die Kapillartiefen, die Längen und die Breiten der Dampfkapillaren sind als Kapillargeometriegrößen anzusehen, welche die Form der Dampfkapillaren vollständig beschreiben können. Sie können sämtlich mit Hilfe einer punktweise erfolgenden Beobachtung parallel zur optischen Achse 42 erfaßt werden, und zwar zeitgenau entsprechend der Auslegung der Meßeinrichtung. Es ist jedoch auch eine weniger vollständige Erfassung der Form der Dampfkapillaren ausreichend, nämlich anhand ausgewählter Kapillargeometriegrößen, wie der maximalen Kapillartiefe d_{K}, der Kapillarlänge L, also der Länge der Öffnung der Dampfkapillaren in Vorschubrichtung durch die Meßachse 42, und der Breite B der Öffnung der Dampfkapillaren 13 quer zur Vorschubrichtung, gemessen durch die Meßachse 42. Die vorgenannten Kapillargeometriegrößen d_{K}, L und B bzw. B/2 sind in der Fig.2 dargestellt.

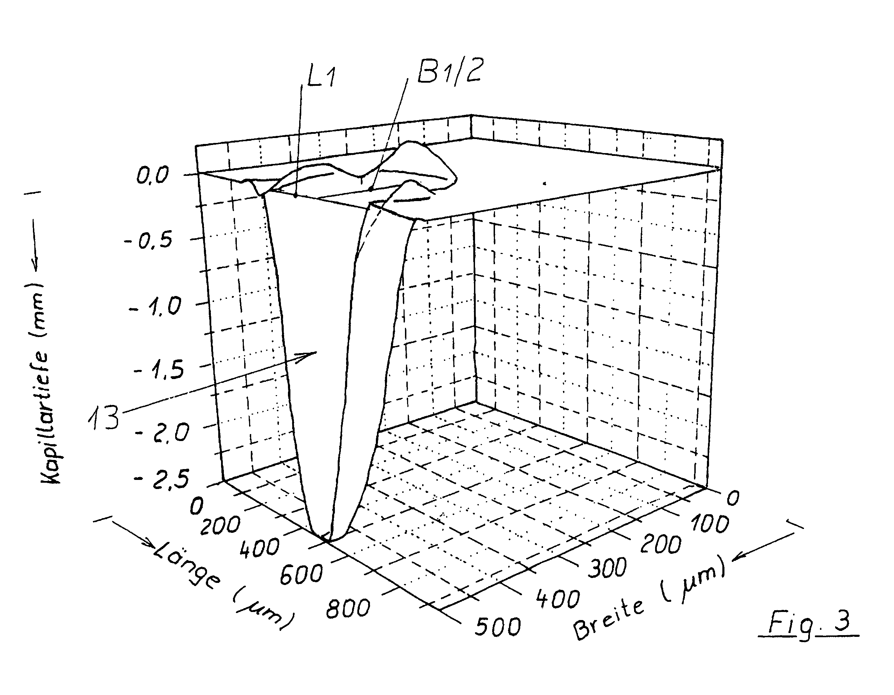

Fig.3 zeigt eine Ausbildung der Dampfkapillaren 13, die von der Ausbildung der Fig.2 abweicht. Der Grund ist die Durchschweißung des Werkstücks, so daß das Werkstück in Einstrahlrichtung zumindest teilweise durchgängig ist. Ein Teil der Laserstrahlung wird daher durch das Werkstück hindurchgestrahlt und steht nicht zur Einkopplung und damit zum Aufschmelzen des Werkstoffs zur Verfügung. Infolgedessen ist die Dampfkapillare 13 sehr viel schlanker. Die Länge L1 ist daher kleiner, als die damit zu vergleichende Kapillarlänge L. Entsprechend ist auch die Breite B₁/2 kleiner. Es ergibt sich, daß beim Laserstrahlschweißen anhand der Ausdehnung der Dampfkapillaren zumindest in Bearbeitungsrichtung der Unterschied zwischen Einschweißung und Durchschweißung ermittelt werden kann, wie der Vergleich der Fig.2,3 ergibt.

Bei der Anwendung von Hochenergiestrahlung, insbesondere von Laserstrahlung, führen geringe Abweichungen der Verfahrensparameter zu erheblichen Änderungen des Bearbeitungsergebnisses. Geringfügige Änderungen von Laserstrahlleistung, Vorschubgeschwindigkeit, Fokusposition usw. können also die Einschweißtiefe und damit die Kapillartiefe, die Fügestruktur und die Stabilität des Prozesses beeinflussen. Deswegen ist die direkte Beobachtung des Fertigungsprozesses bei der Materialbearbeitung von Bedeutung. Die Bearbeitungsparameter sowie sich frei einstellende Prozeßparameter können überwacht werden. Über das bereits angesprochene Ermitteln einer Durchschweißung hinaus, können mit dem Verfahren auch bei der Materialbearbeitung entstehende Bearbeitungsfehler direkt beobachtet werden, zum Beispiel der Schmelzbadauswurf beim Laserstrahlschweißen von Aluminium und das teilweise Verschließen der Abtragsvertiefung. Bei richtiger Umsetzung der Kapillargeometriegrößen können die Bearbeitungsparameter so gesteuert bzw. geregelt werden, daß Bearbeitungsfehler vermieden werden.

Es wurde dargelegt, daß die zeitaufgelöste Erfassung der Geometrie bzw. der Form der Dampfkapillaren möglich ist. Durch die zeitauflösung lassen sich charakteristische Frequenzen ableiten, die die natürliche Bewegung der Dampfkapillaren anzeigen. Eine geeignete Bewertung dieser Bewegungen bzw. der wechselnden Formen der Dampfkapillaren können zu einer Steuerung der Verfahrensparameter benutzt werden, so daß eine Stabilisierung der Wechselwirkungszone bzw. der Dampfkapillaren erfolgt. Dadurch erfolgt der Abtrag gleichmäßig ohne Schweißfehler, wie beispielsweise Poren. Die Stabilisierung der Abtragung verhindert, daß die Dynamik der Gasphase auf das Schmelzbad übertragen wird und so Schwankungen in der Schmelze erzeugt werden, die zu Prozeßfehlern führen können.

Es wurde bereits darauf hingewiesen, daß die Form der Dampfkapillaren von den Bearbeitungsparametern abhängig ist, im wesentlichen von der Laserstrahlleistung und der Vorschubgeschwindigkeit. Dementsprechend kann die Form der Dampfkapillaren auch als Maß für diese Bearbeitungsparameter angesehen und zu deren Steuerung ausgewertet werden.

Dabei ist davon auszugehen, daß die Laserstrahlleistung und die Vorschubgeschwindigkeit unterschiedlich auf die Ausbildung der Dampfkapillaren wirken. Zur Erläuterung wird davon ausgegangen, daß die Laserstrahlleistung und die Vorschubgeschwindigkeit den Begriff der Streckenenergie prägen. Die Streckenenergie ist das Verhältnis der Laserstrahlleistung P_{L} zur Vorschubgeschwindigkeit v. Mit anwachsender Streckenenergie nimmt die Kapillartiefe monoton zu. Bei vielen Materialbearbeitungen ist es ausreichend, die Streckenenergie auf die Bearbeitungsaufgabe abzustimmen. Vielfach kann es jedoch vorteilhaft sein, die dynamischen Effekte der natürlichen Reaktion der Abtragsvertiefung bzw. der Dampfkapillaren zu berücksichtigen. Für das dynamische Verhalten der Dampfkapillaren ist das Aspektverhältnis von Bedeutung, das sich aus der Länge L der Kapillaröffnung in Vorschubrichtung, also der Kapillarlänge, und der Tiefe d_{K} der Dampfkapillaren ergibt. Insoweit gilt also A = L/d_{K}. Ein großes Aspektverhältnis A ermöglicht ein ungehindertes Abströmen des Dampfes aus der Kapillare in die Umgebung, wodurch der Prozeß stabilisiert wird.

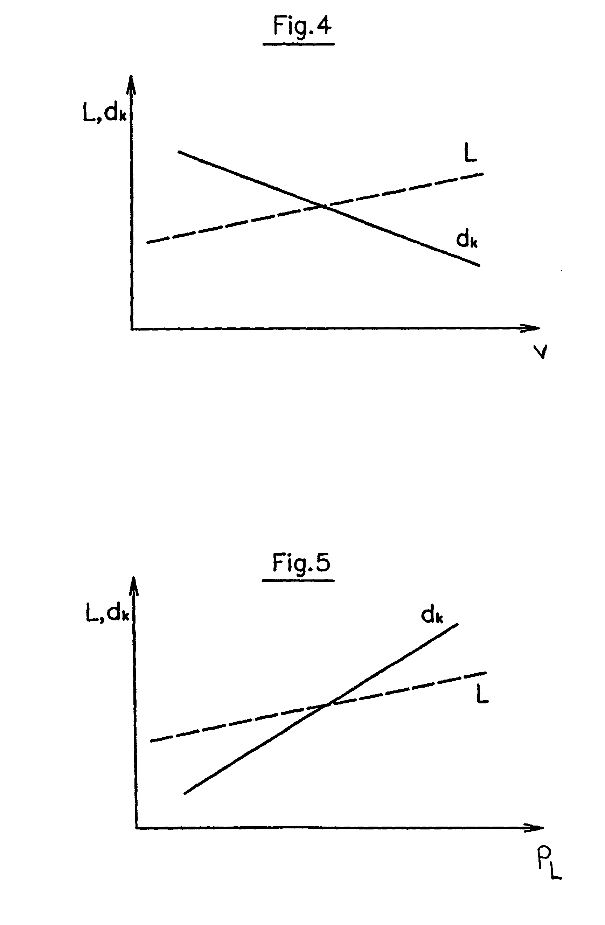

In den Fig.4,5 wird die Abhängigkeit der Kapillarlänge L und der Kapillartiefe d_{K} von der Vorschubgeschwindigkeit v einerseits und der Laserstrahlleistung P_{L} andererseits dargestellt. Es zeigt sich, daß die Kapillarlänge L mit v monoton wächst, während die Kapillartiefe d_{K} mit wachsender Vorschubgeschwindigkeit v monoton fällt. Anders verhält es sich mit der Laserstrahlleistung P_{L}. Deren Anwachsen führt zu größerer Kapillarlänge L, jedoch auch zu einem Anwachsen der Kapillartiefe dₖ.

Nun kann die Kapillarlänge L der Kapillaröffnung meßtechnisch bestimmt werden. Sie hängt nicht von der Streckenenergie P_{L}/v ab, sondern wächst monoton mit der Leistung P_{L} und der Vorschubgeschwindigkeit v. Das Aspektverhältnis A = L/d_{K} kann bestimmt werden.

Die Steuerung der Laserstrahlleistung P_{L} und der Vorschubgeschwindigkeit v kann so erfolgen, daß zugleich eine gewünschte Kapillartiefe d_{K} und ein für eine stabile Schweißung notwendiges Aspektverhältnis A eingestellt werden. Der Wert der Kapillartiefe d_{K} wird durch die Streckenenergie P_{L}/v bestimmt. Das Aspektverhältnis A wird durch die Laserstrahlieistung P_{L} oder die Vorschubgeschwindigkeit v selbst bestimmt. Bei einer Steuerung oder Regelung der Materialbearbeitung müssen die Verfahrensparameter P_{L} und v nicht vorbestimmt sein sondern können in vorteilhafter Weise während der Bearbeitung bestimmt werden. Die Bestimmung der Laserstrahlleistung P_{L} und der Vorschubgeschwindigkeit v während der Bearbeitung erfordert nicht die Kenntnis von vorbestimmten Abhängigkeiten P_{L} = P_{L}(L,d_{K}) und v = v(L,d_{K}) . Das monotone Verhalten der Kapillargeometriegrößen L und d_{K} in Bezug auf P_{L} und v reicht aus, um eine Regelung der Verfahrensparameter P_{L},v zu realisieren.

Die Kapillarlänge L ist eine Funktion der lokalen Tiefe. Also ist auch das die Stabilität der Bearbeitung bestimmende Aspektverhältnis A = A(z₀) = L(z₀/d_{K}) eine Funktion der lokalen Tiefe z₀. Die Wahl der Tiefe z₀, in der das Aspektverhältnis bestimmt wird, hängt von der jeweiligen Materialbearbeitungsaufgabe ab.

Falls nicht definierte Werte für die Kapillargeometriegrößen L und d_{K} erzielt werden müssen, weil es für das Bearbeitungsergebnis ausreicht, einen vorbestimmten Bereich dieser Größen einzuhalten, kann eine Steuerung der Materialbearbeitung mit der Laserstrahlleistung P_{L} bei fester Vorschubgeschwindigkeit v ausreichen.

Für das Ergebnis der Materialbearbeitung ist es von Bedeutung, daß auch die Kapillarbreite B einen Minimalwert nicht unterschreitet. Außer der Kapillarlänge L muß daher auch die Kapillarlänge B meßtechnisch erfaßt werden. Diejenige Kapillargeometriegröße L oder B, die zuerst kritisch wird, bestimmt den möglichen Bereich der Laserstrahlleistung P_{L} und der Vorschubgeschwindigkeit v, in dem ein stabiler schweißvorgang ablaufen kann. Durch Messung der Kapillarbreite B und der Kapillarlänge L kann entschieden werden, welche Größe zuerst kritisch wird. Wird B instabil, muß die Laserstrahlleistung P_{L} reduziert werden.

## Patentansprüche

1. Verfahren zur Materialbearbeitung mit Plasma induzierender Hochenergiestrahlung, insbesondere Laserstrahlung, bei dem der Bereich der Dampfkapillaren (13) des Werkstücks (10) mit einer die gesamte Werkstückdicke erfassenden Tiefenschärfe beobachtet und dabei die Intensität der Plasmastrahlung in Abhängigkeit von der Zeit gemessen wird, **dadurch gekennzeichnet., daß** momentane Plasmaintensitäten an mindestens zwei Meßstellen parallel zur Achse (11) der induzierenden Strahlung (12) gemessen werden, daß die gemessenen Plasmaintensitäten vorbestimmten Kapillargeometriegrößen zugeordnet werden, und daß eine Steuerung der Materialbearbeitung in Abhängigkeit von den Kapillargeometriegrößen erfolgt.

2. Verfahren nach Anspruch 1, **dadurch gekennzeichnet, daß** als Kapillargeometriegrößen eine Kapillartiefe (dk) verwendet wird.

3. Verfahren nach Anspruch 1 oder 2, **dadurch gekennzeichnet, daß** aus einer Vielzahl von Kapillargeometriegrößen die Form der Dampfkapillaren (13) bestimmt und der Steuerung der Materialbearbeitung zugrunde gelegt wird.

4. Verfahren nach einem der Ansprüche 1 bis 3, **dadurch gekennzeichnet, daß** die Länge (L) der Öffnung der Dampfkapillaren (13) in Vorschubrichtung als Kapillargeometriegröße verwendet wird.

5. Verfahren nach Anspruch 4, **dadurch gekennzeichnet, daß** die Laserstrahlleistung (P_{L}) in Abhängigkeit von einer sich gleichsinnig mit der Kapillartiefe (dₖ) ändernden Länge (L) der Öffnung der Dampfkapillaren (13) geregelt wird.

6. Verfahren nach Anspruch 4 oder 5, **dadurch gekennzeichnet, daß** die Vorschubgeschwindigkeit (v) in Abhängigkeit von einer sich gegensinnig zu der Kapillartiefe (dₖ) ändernden Länge (L) der Öffnung der Dampfkapillaren (13) geregelt wird.

7. Verfahren nach einem der Ansprüche 1 bis 6, **dadurch gekennzeichnet, daß** die Breite (B) der Öffnung der Dampfkapillaren (13) quer zur Vorschubrichtung als Kapillargeometriegröße verwendet wird.

8. Vorrichtung zur Materialbearbeitung mit Plasma induzierender Hochenergiestrahlung, insbesondere Laserstrahlung, die mit Fokussiermitteln auf ein Werkstück (10) fokussiert ist, mit einer den Bereich einer Dampfkapillaren (13) des Werkstücks (10) mittels einer die gesamte Werkstückdicke erfassenden Tiefenschärfe beobachtenden Meßeinrichtung (16), die Intensitäten der Plasmastrahlung in Abhängigkeit von der Zeit mißt, und mit einer an die Meßeinrichtung (16) angeschlossenen Auswerteeinheit, die die gemessenen Stahlungsintensitäten in Relation zu vorbestimmten Bezugswerten auswertet, zur Durchführung eines Verfahrens nach einem der Ansprüche 1 bis 7, **dadurch gekennzeichnet, daß** mit mindestens zwei parallel zur Achse (11) der induzierenden Strahlung (12) messenden Detektoren (16',16'') momentane Plasmaintensitäten meßbar sind, die vorbestimmten Kapillargeometriegrößen zuzuordnen sind, in deren Abhängigkeit die Steuerung der Materialbearbeitung beaufschlagbar ist.

9. Vorrichtung nach Anspruch 8, **dadurch gekennzeichnet, daß** die Detektoren (16',16'') Lochblenden sind.

10. Vorrichtung nach Anspruch 9, **dadurch gekennzeichnet, daß** eine erste Lochblende in Vorschubrichtung und eine zweite Lochblende quer zur Vorschubrichtung jeweils außerhalb der Achse (11) der induzierenden Strahlung (12) angeordnet ist.

11. Vorrichtung nach einem der Ansprüche 8 bis 10, **dadurch gekennzeichnet, daß** mindestens eine den Bereich der Dampfkapillaren (13) überdeckende Zeilenkamera vorhanden ist.

12. Vorrichtung nach einem der Ansprüche 8 bis 11, **dadurch gekennzeichnet, daß** ein den gesamten Bereich der Dampfkapillaren (13) abbildender und in einzeln auswertbare Meßpunkte auflösender Bildgeber vorhanden ist.

13. Vorrichtung nach Anspruch 12, **dadurch gekennzeichnet, daß** als Bildgeber eine CCD-Kamera, ein Fotodioden- oder ein Fotomultiplier-Array vorhanden ist.

## Claims

1. Method for treating materials with plasma-inducing high energy radiation, especially laser radiation, wherein the region of the vapour capillaries (13) of the work piece (10) is observed with a focus depth including the entire thickness of the work piece and the plasma radiation intensity is measured in a time-dependant manner **characterised in that** momentary plasma intensities are measured at at least two measurement points which are parallel to the axis (11) of the inducing radiation (12), **in that** the measured plasma intensities are assigned to predetermined capillary geometric parameters and **in that** a control of the material treatment is conducted depending on the capillary geometric parameters.

2. Method as claimed in Claim 1, **characterised in that** a capillary depth (dₖ) is used as capillary geometric parameters.

3. Method as claimed in Claim 1 or 2, **characterised in that** the shape of the vapour capillaries (13) is determined from a plurality of capillary geometric parameters and forms the basis of the control of the material treatment.

4. Method as claimed in any one of Claims 1 to 3, **characterised in that** the length (L) of the aperture of the vapour capillaries (13) in the feed direction is used as a capillary geometric parameter.

5. Method as claimed in Claim 4, **characterised in that** the laser radiation power (P_{L}) is controlled depending on a length (L) of the aperture of the vapour capillaries (13), said length varies in the same direction with the capillary depth (dₖ).

6. Method as claimed in Claim 4 or 5, **characterised in that** the rate of feed (v) is controlled depending on a length (L) of the aperture of the vapour capillaries (13), said length varies in the same direction to the capillary depth (dₖ).

7. Method as claimed in any one of Claims 1 to 6, **characterised in that** the width (B) of the aperture of the vapour capillaries (13) transverse to the feed direction is used as a capillary geometric parameter.

8. Device for treating materials with plasma-inducing high energy radiation, especially laser radiation, which is focussed onto a work piece (10) by means of focussing means, said device having a measuring device (16) which observes the region of a vapour capillaries [*sic*] (13) of the work piece (10) by means of a focus depth including the entire thickness of the work piece and which measures - dependant on time - the plasma radiation intensities, and having an evaluation unit - connected to the measuring device (16) - which evaluates the measured radiation intensities in relation to predetermined reference values, said device intended for executing a method as claimed in any one of Claims 1 to 7, **characterised in that** momentary plasma intensities can be measured by means of at least two measuring detectors (16', 16") which are parallel to the axis (11) of the inducing radiation (12), said plasma intensities are assigned to predetermined capillary geometric parameters and the control of the material treatment can be imposed depending on said capillary geometric parameters.

9. Device as claimed in Claim 8, **characterised in that** the detectors (16', 16") are apertured plates.

10. Device as claimed in Claim 9, **characterised in that** a first apertured plate is disposed in the feed direction and a second apertured plate is disposed transverse to the feed direction, both apertured plates being disposed outside of the axis (11) of the inducing radiation (12).

11. Device as claimed in any one of Claims 8 to 10, **characterised in that** at least one line camera covering the region of the vapour capillaries (13) is provided.

12. Device as claimed in any one of Claims 8 to 11, **characterised in that** an image source which images the entire region of the vapour capillaries (13) and which resolves the separate measuring points - which can be evaluated - is provided.

13. Device as claimed in Claim 12, **characterised in that** a CCD-camera, a photodiode array or a photo multiplier array is provided as the image source.

## Revendications

1. Procédé pour l'usinage de matière à l'aide d'un rayonnement à haute énergie induisant un plasma, en particulier un rayonnement laser, selon lequel la zone des capillaires de vapeur (13) de la pièce (10) est observée avec une profondeur de champ qui couvre toute l'épaisseur de la pièce, et l'intensité du rayonnement laser est mesurée en fonction du temps, **caractérisé en ce que** des intensités de plasma momentanées sont mesurées au niveau d'au moins deux points de mesure, parallèlement à l'axe (11) du rayonnement inducteur (12), **en ce que** les intensités de plasma mesurées sont associées à des grandeurs géométriques de capillaires prédéfinies, et **en ce qu'**une commande de l'usinage de matière a lieu en fonction des grandeurs géométriques de capillaires.

2. Procédé selon la revendication 1, **caractérisé en ce qu'**on utilise comme grandeurs géométriques de capillaires une profondeur de capillaire (dₖ).

3. Procédé selon la revendication 1 ou 2, **caractérisé en ce que** la forme des capillaires de vapeur (13) est définie à partir d'une multiplicité de grandeurs géométriques de capillaires et sert de base à la commande de l'usinage de matière.

4. Procédé selon l'une des revendications 1 à 3, **caractérisé en ce que** la longueur (L) de l'ouverture des capillaires de vapeur (13) dans le sens d'avance est utilisée comme grandeur géométrique de capillaire.

5. Procédé selon la revendication 4, **caractérisé en ce que** la puissance de rayon laser (P_{L}) est réglée en fonction d'une longueur (L) de l'ouverture des capillaires de vapeur (13) qui varie dans le même sens que la profondeur de capillaire (dₖ) .

6. Procédé selon la revendication 4 ou 5, **caractérisé en ce que** la vitesse d'avance (v) est réglée en fonction d'une longueur (L) de l'ouverture des capillaires de vapeur (13) qui varie en sens inverse par rapport à la profondeur de capillaire (dₖ).

7. Procédé selon l'une des revendications 1 à 6, **caractérisé en ce que** la largeur (B) de l'ouverture des capillaires de vapeur (13) transversalement par rapport au sens d'avance est utilisée comme grandeur géométrique de capillaire.

8. Dispositif pour l'usinage de matière avec un rayonnement à haute énergie induisant un plasma, en particulier un rayonnement laser, qui est focalisé sur une pièce (10) à l'aide de moyens de focalisation, comportant un dispositif de mesure (16) qui observe la zone d'un capillaire de vapeur (13) de la pièce (10) à l'aide d'une profondeur de champ couvrant toute l'épaisseur de la pièce et qui mesure des intensités du rayonnement de plasma en fonction du temps, et comportant une unité d'évaluation qui est reliée au dispositif de mesure (16) et qui évalue par rapport à des valeurs de référence prédéfinies les intensités de rayonnement mesurées, pour la mise en oeuvre d'un procédé selon l'une des revendications 1 à 7, **caractérisé en ce que** grâce à au moins deux détecteurs (16', 16") mesurant parallèlement à l'axe (11) du rayonnement inducteur (12), on peut mesurer des intensités de plasma momentanées qui doivent être associées à des grandeurs géométriques de capillaires prédéfinies en fonction desquelles la commande de l'usinage de matière peut être sollicitée.

9. Dispositif selon la revendication 8, **caractérisé en ce que** les détecteurs (16', 16") sont des diaphragmes perforés.

10. Dispositif selon la revendication 9, **caractérisé en ce qu'**un premier diaphragme perforé est disposé dans le sens d'avance et un second diaphragme perforé est disposé transversalement par rapport au sens d'avance, dans les deux cas en dehors de l'axe (11) du rayonnement inducteur (12).

11. Dispositif selon l'une des revendications 8 à 10, **caractérisé en ce qu'**il est prévu au moins une caméra horizontale qui couvre la zone des capillaires de vapeur (13) .

12. Dispositif selon l'une des revendications 8 à 11, **caractérisé en ce qu'**il est prévu un détecteur d'image qui reproduit toute la zone des capillaires de vapeur (13) et qui décompose cette zone en points de mesure aptes à être évalués individuellement.

13. Dispositif selon la revendication 12, **caractérisé en ce qu'**il est prévu comme détecteur d'image une caméra à couplage de charge, un ensemble de photodiodes ou un ensemble de photomultiplicateurs.
